# EUROPEAN PATENT APPLICATION

(11) **EP 2 518 623 A1**
(43) Date of publication of application: **31.10.2012**
(21) Application number: 12164217.7
(22) Date of filing: 16.04.2012
(51) Int. Cl.: G06F 9/445

(54) **Method for dynamically reversing business functions**

(30) Priority: 26.04.2011 US 201113094114
(71) Applicant: SAP AG, 69190 Walldorf (DE)
(72) Inventor: Kemmler, Andreas, 69190 Walldorf (DE); Kamenz, Torsten, 69190 Walldorf (DE)
(74) Representative: Richardt Patentanwälte GbR

(57) **Abstract**

The present invention relates to a computer-implemented method for updating program functions being installed on a computer system (500), each of the updated program functions being implemented by a set of software elements (507) in association with a table (505) storing customizing values for default values for parameters of the updated program function, each of the updated program functions being associated with state information (523), wherein the state information (523) indicate active and inactive states of the updated program function, wherein a logical value of one or more of a plurality of stored software switches (525) depends on the state information (523), each of the software switches (525) enabling or disabling execution of the software elements (507) according to its logical value.

## Description

### FIELD OF THE INVENTION

The present invention is directed to methods for dynamically setting function reversibility among a mixture of business functions that have been made available to customers through different releases of software packages.

### Background

Procurement of complex business applications moves toward on-demand and asneeded purchases. Instead of purchasing major releases of a business application every five years or so, a customer may selectively purchase from an annual enhancement package based on the customer's business needs. The customer may choose and purchase components of specific functionalities from the enhancement package for immediate deployment at a reduced cost. Thus, the customer may enhance its business application capabilities timely without incurring unnecessary expenses.

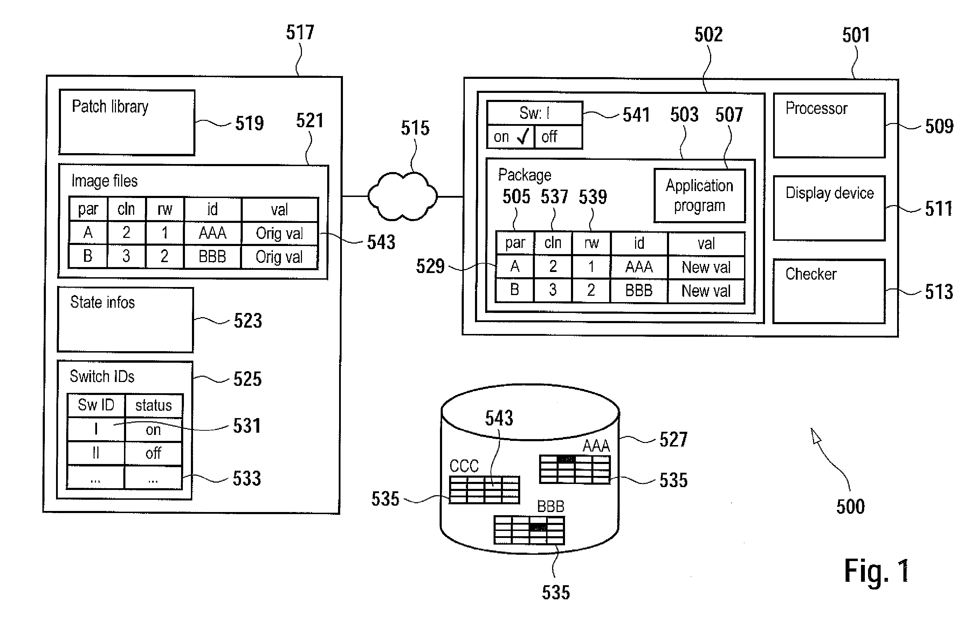

To deploy the selected functionalities of the enhanced package, a user and/or a vendor may need to switch on the selected functionalities. FIG. 1 illustrates the process for the deployment of functionalities to a user's system. A development package 110 as part of an enhancement package is stored in a storage in a user's system. The package 110 may include bundled development objects. Thus, the package 110 includes a set of switchable development objects 112 and switch business configuration sets (SBCS) 114, 116. The set of switchable development objects 112 are a type of development objects that, when deployed, perform business functions. SBCS 114, 116 are container objects that include data entries to be inserted into tables 118 stored in the user's system. For example, the data entries include configuration data to be inserted into a configuration table of the user's system. In addition to contents to be inserted into different tables, SBCS 114, 116 include contents that result in new table entries, updates to existing table entries, and deletions of table entries. SBCS 114, 116 are associated with package 110 through links 120. The process of associating SBCS 114, 116 is achieved by program developers executing specific applications in a development environment to create links 120. These links are stored in an attribute table of SBCS 114, 116 and delivered to the customer as part of the enhancement package.

To deploy business functions to the user's system, a processor in the user's system executes a user interface program to display graphic elements 104, 106 on a hardware display counsel. The displays are organized into sets in accordance with types of business functions. Each set and/or business function is associated with a select element such as a checkbox button. For example, the graphic element 104 includes a display for "Business Function Set 1" and an associated select element. Further, the "Business Function Set 1" includes business functions such as "Advertise Management" and "Contract Account," each being associated with a select element. Similarly, the graphic element 106 includes a display for the "Business Function Set 2" and an associated select element. Further, the "Business Function Set 2" includes business functions such as "HCM E-Recruit" and "Maternal Management," each being associated with a select element. When the select elements of a business function set and/or a business function are selected, a corresponding switch is switched on. For example, switches 1, 3, and 5 in the set of switches 108 are switched on in response to the selection of "Business Function Set 1," "Advertise Management function," and "HCM E-Recruit" function. The set of switches 108 includes binary bits that, when turned into "1," indicate that a corresponding business function has been activated.

In response to the activation of a business function by enabling a switch (switch on), the processor is configured to activate the business function corresponding to development objects by making these objects visible and active. From the code development point of view, this means that these objects are executed after they are switched on and activated. In response to the activation or switching-on of switchable development objects 112, SBCS 114, 116 that are also associated with the activated switch (SWITCH1) via development package 110 may also be activated. The activation of the associated SBCS may cause the extraction of the SBCS contents to corresponding tables 118 stored in the user's system.

Previously, the process of extracting table entries contained in SBCS 114, 116 into the tables 118 is not reversible in the sense that once the table entries are inserted into tables 118, they may overwrite contents stored in the table 118. Thus, business functions of earlier versions of enhancement packages that refer to these SBCS may not be reversible.

It may be desirable to grant customers the ability of testing business functions contained in the enhancement package on the customer's development and test systems prior to actual deployment in the customer's productive system. Thus, the latest version of enhancement packages allows SBCS 114, 116 to be reversed so that business functions associated with the new SBCS 114, 116 may be set to be reversible and be capable of switching off after customer evaluation.

### Summary of invention

It is an objective of embodiments of the invention to provide for a computer implemented method for updating program functions, system and corresponding computer-readable storage medium. Said objective is solved by the subject matter of the independent claims. Advantageous embodiments are described in the dependent claims.

The term 'computer-readable storage medium' or 'computer program product' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, punched tape, punch cards, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. References to a computer-readable storage medium should be interpreted as possibly being multiple computer-readable storage mediums. Various executable components of a program or programs may be stored in different locations. The computer-readable storage medium may for instance be multiple computer-readable storage medium within the same computer system. The computer-readable storage medium may also be computer-readable storage medium distributed amongst multiple computer systems or computing devices.

The term 'Computer memory' or 'memory' or 'storage' is an example of a computer-readable storage medium. Computer memory is any memory which is directly accessible to a processor. Examples of computer memory include, but are not limited to: RAM memory, registers, and register files. References to 'computer memory' or 'memory' or 'storage' should be interpreted as possibly being multiple memories. The memory may for instance be multiple memories within the same computer system. the memory may also be multiple memories distributed amongst multiple computer systems or computing devices.

The term 'computer system' as used herein encompasses to any device comprising a processor. A 'processor' as used herein encompasses an electronic component which is able to execute program code. References to the computing device comprising "a processor" should be interpreted as possibly containing more than one processor or processing core, The processor may for instance be a multi-core processor. A processor may also refer to a collection of processors within a single computer system or distributed amongst multiple computer systems. The term computer system should also be interpreted to possibly refer to a collection or network of computing devices each comprising a processor or processors.

The term 'user interface' as used herein is an interface which allows a user to interact with a computer or computer system. A 'user interface' may also be referred to as a 'human interface device.' A user interface may provide information or data to the user and/or receive information or data from the user. A user interface may enable input from an user to be received by the computer and may provide output to the user from the computer. In other words, the user interface may allow an user to control or manipulate a computer and the interface may allow the computer indicate the effects of the user's control or manipulation. The display of data or information on a display or a graphical user interface is an example of providing information to a user. The receiving of data through a keyboard, mouse, trackball, touchpad, pointing stick, graphics tablet, joystick, gamepad, webcam, headset, gear sticks, steering wheel, pedals, wired glove, dance pad, remote control, one or more switches, one or more buttons, and accelerometer are all examples of user interface components which enable the receiving of information or data from a user.

The term 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bitable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

The term 'database' as used herein encompasses a data file or repository which contains data that may be accessed by a processor. Examples of databases are, but are not limited to: a data file, a relational database, a file system folder containing data files, a collection of data tables and a spreadsheet file.

The term 'Customizing parameters' refers to parameters that change the behavior ("identity") of a computing system or program in a quasi-static manner, and are to be differentiated from input data on which a computing system or program dynamically operates to produce output. For instance, such customizing parameters can be configuration parameters in the form of predefined alphanumerical values or pairs of tags and values in a configuration file.

The term 'software switch' or 'switch' as used herein is a software implemented switching function for switching on or off the execution of a particular fragment of executable code that implements a function.

The term 'software element' as used herein refers to any software entity, for example a group of computer programs, individual computer programs. Program components such as events, screens, menus, and function modules are also software elements.

The term 'image file' as used herein refers to a storage file that can store the data from a particular source and keep it intact so that its content can be restored at a later time. The term image file relates here to an 'image of data' in the sense of a data backup and doesn't relate to pictures or photos.

In one aspect, the present invention relates to a computer-implemented method for updating program functions being installed on a computer system, each of the updated program functions being implemented by a set of software elements in association with a table storing customizing values for default values for parameters of the updated program function, each of the updated program functions being associated with a state information, wherein the state information indicates active and inactive states of the updated program function, wherein a logical value of one or more of a plurality of stored software switches depends on the state information, each of the software switches enabling or disabling execution of the software elements according to its logical value, the method comprising for each of the updated program functions:
- presenting a plurality of program functions of at least one set of functions for selection by a user;
- receiving a selection of the updated program function, wherein the active state of the updated program function is triggered by a reception of an activation of the updated program function, the active state comprising actively processing the updated program function by executing the software elements according to the logical value of the software switch, wherein the processing comprises writing each of the customizing values into respective cells of at least one database table of the computer system, thereby updating the default values, each cell being identified by a cell identifier comprising a column and row fields of the at least one database table, creating, by a software patch, an image file comprising the default values and their respective cell identifiers and storing, by the software patch, the image file in a storage component of the computer system;
- if the updated program function is in the inactive state generating a first search request containing an identifier of the software patch; searching a plurality of identifiers of stored items for the identifier of the software patch; and if the identifier of the software patch is found, displaying the table as reversible, otherwise displaying the table as irreversible;
- if the updated program function is in the active state generating a second search request containing respective cell identifiers of the customizing values for parameters of the updated program function; searching a plurality of stored image files for the cell identifiers by matching each of the cell identifiers with each of the cell identifiers of the image files; and if there is a match, displaying the table as reversible, otherwise displaying the table as irreversible;
- if the table is irreversible, displaying the updated program function as irreversible;
- if the table is reversible determining at least one selection criterion of the updated program function; if the at least one selection criterion is not satisfied, displaying the updated program function as irreversible; otherwise, displaying the updated program function as reversible.
- wherein the updated program function is reversible comprises enabling activating and deactivating of the updated program function.

Customers often request the possibility to switch off an updated (or enhancement) program function after having evaluated its new functionality in a computer system. But this is not possible for most of the program functions since multiple program functions are working with customizing values for parameters of the program functions. And the customizing values for the parameters are not reversible in the sense that the original or default values of the parameters are overwritten as soon as the updated program function is applied. Thus, before deciding to activate the new functionality, the customers may first want to know whether it is possible to switch off the new functionality and restore the previous functionality, that is, the customers want to know whether or not the updated program function is reversible. To overcome this issue, the present invention provides a method for updating a program function by first checking its reversibility. Instead of offering an updated program function as reversible statically the reversibility attribute is calculated in the customer systems e.g. based on the availability of a required reversibility software patch. With that, many additional updated program functions may be reversible for many customers.

According to one embodiment, the software patch is a software code being inserted into an executable program. The executable program is an auto-run file which can be invoked by the computer system.

According to one embodiment, the identifier of the software patch comprises a file identifier of the executable program file.

According to one embodiment, the file identifier is a file Cyclic Redundancy Check number, Hash number, SHA-1 or MD5 of the executable program file. This may have the advantage of providing a robust method to calculate a file identifier, such that different files have different identifiers. This allows checking whether the file being requested is or is not one of the previously stored files on the storage.

According to one embodiment, the searching comprises comparing the file identifier with each identifier of the plurality of identifiers of stored items. This makes use of the fact that different files have different identifiers.

According to one embodiment, displaying the table comprises: executing a user interface program to display graphic elements on a hardware display counsel, the graphic element comprises a display of "table" associated with a checkbox element, wherein the checkbox displays reversibility status of the table; and flagging the checkbox, wherein the flagging is indicative of the table being reversible or not.

According to one embodiment, displaying the updated program function executing a user interface program to display graphic elements on a hardware display counsel, the graphic element comprises a display of "updated program function" associated with a checkbox, wherein the checkbox displays reversibility status of the updated program function; and flagging the checkbox, wherein the flagging is indicative of the updated program function being reversible or not.

The display helps the user of the computer system to recognize whether its selected function is reversible or not, and to make an appropriate decision as to whether or not activating an updated program function.

According to one embodiment, the at least one selection criterion comprises the software elements are transported into a productive system of the computer system. The computer system may comprise a test system as well as a productive system. The test system may be used for testing of a program function without disrupting or otherwise influencing productive execution of the program function. The present invention concerns the productive execution of the updated program function. According to one embodiment, the software elements and the table relate to a software package. This package structure encompasses the new update or enhancement, which must be explicitly switched on to become active / visible in the system. A 'package' as used herein is a container for objects such as computer programs that logically belong together; for example, all of the objects in an application.

In another aspect, the invention relates to a computer-readable non-transitory storage medium comprising computer-readable instructions which, when executed by a processor, cause the processor to perform the method steps of anyone of the previous embodiments.

In another aspect, the invention relates to a computer system for updating program functions being installed on a computer system, each of the updated program functions being implemented by a set of software elements in association with a table storing customizing values for default values for parameters of the updated program function, each of the updated program functions being associated with state information, wherein the state information indicate active and inactive states of the updated program function, wherein a logical value of one or more of a plurality of stored software switches depends on the state information, each of the software switches enabling or disabling execution of the software elements according to its logical value, for each of the updated program functions the computer system being adapted for:
- presenting a plurality of program functions of at least one set of functions for selection by a user;
- receiving a selection of the updated program function, wherein the active state of the updated program function is triggered by a reception of an activation of the updated program function, the active state comprising actively processing the updated program function by executing the software elements according to the logical value of the software switch, wherein the processing comprises writing each of the customizing values into respective cells of at least one database table of the computer system, thereby updating the default values, each cell being identified by a cell identifier comprising column and row fields of the at least one database table, creating, by a software patch, an image file comprising the default values and respective cell identifiers and storing, by the software patch, the image file in a storage component of the computer system;
- if the updated program function is in the inactive state generating a first search request containing an identifier of the software patch; searching a plurality of identifiers of stored items for the identifier of the software patch; and if the identifier of the software patch is found, displaying the table as reversible, otherwise displaying the table as irreversible;
- if the updated program function is in the active state generating a second search request containing respective cell identifiers of the customizing values for parameters of the updated program function; searching a plurality of stored image files for the cell identifiers by matching each of the cell identifiers with each of the cell identifiers of the image files; and if there is a match, displaying the table as reversible, otherwise displaying the table as irreversible;
- if the table is irreversible, displaying the updated program function as irreversible;
- if the table is reversible determining at least one selection criterion of the updated program function; if the at least one selection criterion is not satisfied, displaying the updated program function as irreversible; otherwise, displaying the updated program function as reversible.
- wherein the updated program function is reversible comprises enabling activating and deactivating of the updated program function.

In another aspect, the invention relates to a computer-implemented method for determining reversibility of a business function performed by a plurality of development objects in a user's system, comprising: determining, by a processor, reversibility of an accessory container object based on a plurality of environmental factors of the user's system, the accessory container object being associated with the development objects via a development package containing both the development objects and the accessory container object; responsive to a determination that the accessory container object is reversible, checking, by the processor, a set of conditions specific to the business function to determine whether the business function is reversible; and if the business function is reversible, displaying, by the processor, the business function as reversible, if the business function is not reversible, displaying, by the processor, the business function as irreversible.

According to one embodiment, the business function is part of an enhancement package that is selectively activated by a user on the user's system.

According to one embodiment, the accessory container object includes data entries associated with the business object, and responsive to an activation of the business function, the data entries are extracted from the accessory container object to tables stored on the user's system.

According to one embodiment, the tables include a configuration table of the user's system.

According to one embodiment, the data entries are one of updated and deleted after being extracted.

According to one embodiment, the determining of the reversibility of the accessory container object further includes: determining whether the business function is activated; if the business function is activated, determining whether the accessory container object is linked to an image file for storing a pre-image of the tables to which a content of the accessory container object is extracted; if the accessory container object is not linked to the image file, displaying the business function as irreversible; if the accessory container object is linked to the image file, determining the business function as reversible; if the business function is not activated, determining whether a reversibility patch exists in the user's system, wherein the reversibility patch when executed creates the pre-image of the tables to which the accessory container object is extracted; if the reversibility patch does not exist in the user's system, displaying the business function as irreversible; if the reversibility patch exists, determining the business function as reversible.

According to one embodiment, the checking of the set of conditions includes determining any one of the set of conditions is not met; if any one of the set of conditions is not met, displaying the business function as irreversible; otherwise, displaying the business function as reversible.

According to one embodiment, the set of conditions includes whether the plurality of development objects that performs the plurality of business functions are transported into a productive system.

In another aspect, the invention relates to a machine-readable non-transitory medium stored thereon executable codes that, when executed, perform a method for determining reversibility of a business function performed by a plurality of development objects in a user's system, the method comprising: determining reversibility of an accessory container object assigned to the plurality of development objects based on a plurality of environmental factors of the user's system, the accessory container object being associated with the development objects via a development package containing both the development objects and the accessory container object; responsive to a determination that the accessory container object is reversible, checking a set of conditions specific to the business function to determine whether the business function is reversible; if the business function is reversible, displaying the business function as reversible, if the business function is not reversible, displaying the business function as irreversible.

According to one embodiment, the business function is part of an enhancement package that is selectively activated by a user on the user's system.

According to one embodiment, the accessory container object includes data entries associated with the business object, and responsive to an activation of the business function, the data entries are extracted from the accessory container object to tables stored on the user's system.

According to one embodiment, the tables include a configuration table of the user's system.

According to one embodiment, the data entries are one of updated and deleted after being extracted.

According to one embodiment, the determining of the reversibility of the accessory container object further includes: determining whether the business function is activated; if the business function is activated, determining whether the accessory container object is linked to an image file for storing a pre-image of the tables to which a content of the accessory container object is extracted; if the accessory container object is not linked to the image file, displaying the business function as irreversible; if the accessory container object is linked to the image file, determining the business function as reversible; if the business function is not activated, determining whether a reversibility patch exists in the user's system, wherein the reversibility patch when executed creates the pre-image of the tables to which the accessory container object is extracted; if the reversibility patch does not exist in the user's system, displaying the business function as irreversible; if the reversibility patch exists, determining the business function as reversible.

According to one embodiment, the checking of the set of conditions includes determining any one of the set of conditions is not met; if any one of the set of conditions is not met, displaying the business function as irreversible; otherwise, displaying the business function as reversible.

According to one embodiment, the set of conditions includes whether the plurality of development objects that performs the plurality of business functions are transported into a productive system.

As will be appreciated by one skilled in the art, aspects of the present invention may be embodied as a system, method or computer program product. Accordingly, if not explicitly stated otherwise, aspects of the present invention may take the form of an entirely hardware embodiment, an entirely software embodiment (including firmware, resident software, micro-code, etc.) or an embodiment combining software and hardware aspects that may all generally be referred to herein as a 'module' or 'system'. Any combination of one or more computer-readable medium(s) may be utilized.

### Brief Description of the Drawings OF THE EXAMPLE EMBODIMENTS

In the following, preferred embodiments of the invention will be described in greater detail by way of example only making reference to the drawings in which:
FIG. 1 illustrates system architecture for the execution of a method for updating program functions.
FIG. 2 illustrates the process for the deployment of functionalities on to a user's system.
FIG. 3 illustrates a flow diagram for dynamically determining the reversibility of a business function.
FIG. 4 illustrates a flow diagram for determining reversibility of a business function based on environmental factors of user's system.

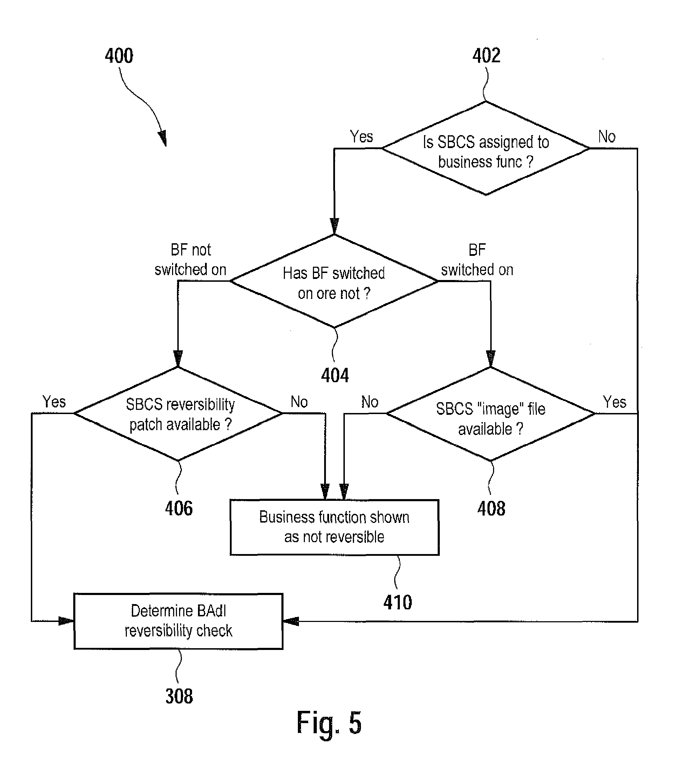

FIG. 5 illustrates a flow diagram for determining reversibility of switch BC sets.

### Detailed Description OF THE EXAMPLE EMBODIMENTS

Fig. 1 shows a computer system 500 operable to execute a process for checking reversibility of an updated program function. The updated program function is implemented by a set of software elements in association with a table 505 storing customizing values for default values for parameters 529 of the updated program function. The updated program function is associated with state information 523 which indicate active and inactive states of the updated program function. A logical value of one or more of a plurality of software switches depends on the state information 523. The software switches of the updated program function get the logical value and a status 'on' ('off') when the state information 523 of the associated updated program function is active (inactive). Each of the software switches has an assigned predefined unique identifier. The one or more software switches are given in table 533 by the respective identifier or identifiers 531. Each of the software switches enables or disables execution of the software elements according to its logical value. Fig. 1 shows an example of a software switch with an identifier 'I' having a logical value 'on'. The package 503 is assigned to this software switch. The active state of this software switch enables the execution of the application program 507 corresponding to the software elements which is part of the package 503.

The computer system 500 comprises a user device 501 and a repository 517. The user device 501 comprises a memory device 502, a processor 509, a display device 511 and a checker 513. Memory device 502 may be used to store instructions such as application program 507 corresponding to the software elements, which may be executed by processor 512 to cause user device 501 to implement the enhancement associated with the updated program function. The memory device 502 further comprises the table 505. The table 105 may include entries 529 or combination of entries of database tables 535. Each entry is associated with a cell of the database tables 535 and each cell is identified by a cell identifier comprising a column 537 and row fields 539 of the corresponding database tables 535. For example, the entry 'A' 529 is identified by the column number 2 and the row number 1 of the table 'AAA' 535 of the database 527. These entries values (or customizing values) 529 may be copied / extracted into the corresponding database table 535 as soon as the software switch 541 assigned to the table 505 is activated. This is followed by the execution of a software patch that creates an image file containing the original (or default) values 543 of the entries 529 of the database table 535 and their respective cell identifiers. The image file is stored by the software patch in an image file folder 521. Display device 514 may be implemented by using a graphical user interface (GUI) to allow, for example, a user to selectively enable and disable the updated program functions. User device 501 may also include additional components such as an input device. The user device 501 may communicate with a repository 517 via communication network 515. The communication may include sending data, such as requests to provide the state information of the updated program function. Repository 517 may include patch library 519, image files folder 521, state information 523 of the updated program functions and the software switches 525. The user device 501 may use checker 513 to search the patch library 519 for the software patch. The user device 501 may receive input from the input device such as a keyboard and provides visual outputs to the display device.

A user may use the input device for selecting the updated program function and checking the reversibility of that updated program function. In response to the user request checker 513 is started by reading the state information 523 associated to the updated program function.

The checker 513 checks first whether the table 505 is reversible or not. In case the state information 523 is indicative of an active state of the updated program function, and upon generating a search request containing respective cell 545 identifiers such as, column and row number 537 and 539 of the customizing values for parameters 529 of the updated program function, the checker searches a plurality of stored image files in the image folder 521 for the cell identifiers by matching each of the cell identifiers with each of the cell identifiers of the image files. If there is a match between each of the cell identifiers with each of the cell identifiers of the image files, the checker causes the display device 511 to display the table 505 as reversible, otherwise the table 505 is displayed as irreversible.

In case the state information is indicative of an inactive state of the updated program function, the checker 513 checks for the availability of the software patch that implement the creation and storage of the image files, that is, it enable reversibility of the table 505. For this end, the checker generates a search request containing an identifier of the software patch. The identifier may be for example a file identifier of the executable program file, wherein the file identifier is a file Cyclic Redundancy Check number, Hash number, SHA-1 or MD5 of the executable program file. The checker 513 may compare the file identifier with each identifier of the plurality of identifiers of stored items in the patch library 519. If the identifier of the software patch is found, the checker causes the display device to display the table 505 as reversible, otherwise the table 505 is displayed as irreversible.

Based on the first checks results, the checker 513 may determine the reversibility of the updated program function. If the table 505 is irreversible, the checker causes the display device to display the updated program function as irreversible.

In case the table 505 is reversible, the checker 513 may perform further checks such as determining at least one selection criterion of the updated program function. The selection criterion may be for example 'the application program 507 corresponding to the software elements are transported into a productive system of the computer system 501 ". In fact, the computer system may comprise a test system as well as a productive system. The test system may be used for testing of a program function without disrupting or otherwise influencing productive execution of the program function. The present method concerns the productive execution of the updated program function. If the at least one selection criterion is not satisfied, the checker 513 causes the display device 511 to display the updated program function as irreversible; otherwise, the updated program function is displayed as reversible.

Due to the legacy of code development, a mixture of different versions of business functions may be co-existing in the customer's system. This may be best explained in the following exemplary scenario. In a first release, only a few business functions may be hard-coded as "reversible," but the majority of the business functions are not labeled as "reversible." In a subsequent second release, the business functions may be similarly labeled as the first release. In a subsequent third release, the business functions may be released to customers as "reversible." In addition, a software patch to create reversibility to business functions of the second release may also be released to customers. However, since most business functions of the second release in customer's possession are not labeled as "reversible," these business functions need a determination of their reversibility based on environmental factors of the user's system. The customer may have activated a portion of the second release of business functions along with SBCS. This portion of business functions may not be reversible. However, the remainder portion of these business functions may have yet been activated by the customer. Since these yet-activated business functions are not hard-coded with a "reversible" flag, they do not appear to be "reversible" once they are activated. Additionally, in the customer's system, development objects installed thereon along with the latest version of SBCS are coded with flags indicating whether these development objects are reversible or not. To reduce confusion and present a consistent service to customers, it is desirable for customers to be able to reverse those yet-activated development objects installed along with SBCS.

To reverse an activated business function, the business function needs to be switched off. Additionally, it is expected that table storing the table entries of the SBCS associated with the activated development object be restored. As discussed above, table entries extracted from the SBCS associated with development objects may have been updated or deleted during activation of the development objects. To have the capability of restoring the table, contents of the original table may need to be archived in an image file on the user's system. Because the earlier version of SBCS is not associated with such an image file, table restoration may not be achieved through pre-images of the table. In contrast, the newer version of SBCS may include a link to an image file so that prior to an update or deletion of a table entry, a pre-image of the table may be archived in the image file so that the pre-image may be used to restore the table when necessary.

Software patches may add reversibility to an earlier version of SBCS. These software patches may be shipped to and installed on the customer's system to enable the earlier version of SBCS to be reversible. These software patches may, upon activation of a business function and before extracting table entries from SBCS and overwriting existing table entries on the customer's system, create pre-images for the existing table contents so that these table contents may be copied into the pre-images. With all these different options on the user's system, it is an object of an embodiment of the present invention to provide a method to determine the reversibility of a business function dynamically based on the environmental factors of the user's system rather than statically based on flags associated with the business function. The environmental factors of the user's system may include availability of the reversibility patches, image files, and attributes of business functions.

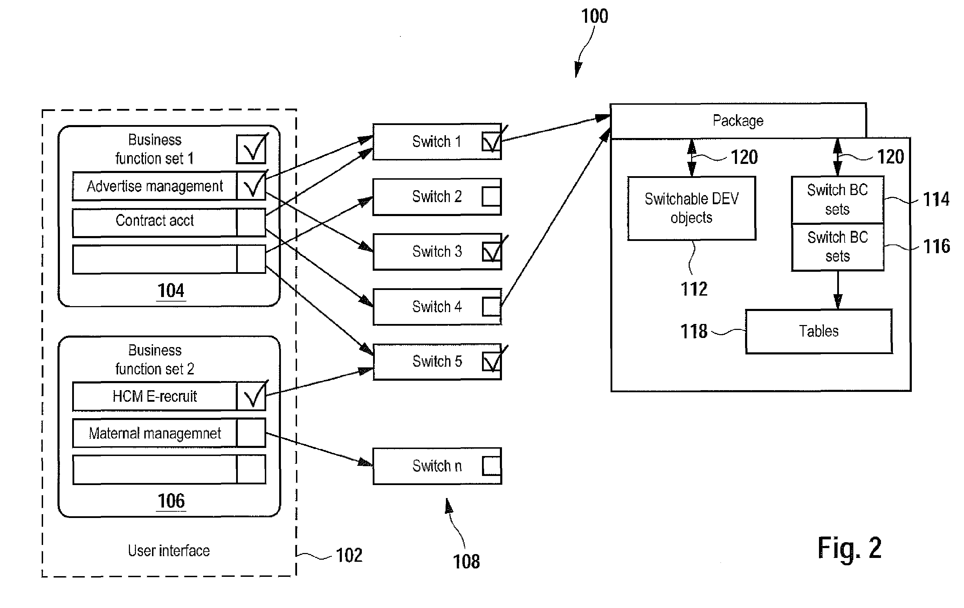

FIG. 2 illustrates a flow diagram for dynamically determining the reversibility of a business function according to an exemplary embodiment of the present invention. At 202, in response to a request to determine the reversibility of a business function, a processor on the user's system may be configured to check a global setting on the user's system to determine whether the global setting allows business functions to be reversed. This global setting may globally affect the reversibility of all business functions. Thus, when the global setting allows business functions on the user's system to be reversed after a testing period, the processor may proceed further.

At 204, in response to a determination that the global setting allows for a reversal of business functions, the processor may be configured to determine the reversibility of SBCS associated with the development package and the business function contained therein based on environmental factors on user's system. The environmental factors may include the availability of certain patches that may convert the earlier version of SBCS into a reversible SBCS and the availability of image files associated with the SBCS.

At 206, in response to a determination that the SBCS may be reversed, the processor may be configured to determine the reversibility of the business function based on certain attributes of the development objects that, when activated, perform the business function. These attributes of the development objects may specify conditions under which the corresponding business function may be reversed or switched off.

At 208, in response to a determination that attributes of the business functions allow them to be reversed, the processor may proceed to prepare and display the business function as reversible. The preparation of the business function may include creating image files for the business function and further associating the created image files with SBCS. Thus, these business functions may be reversed after they are activated in the future. Further, the processor may display an indicator on a display counsel of the reversibility.

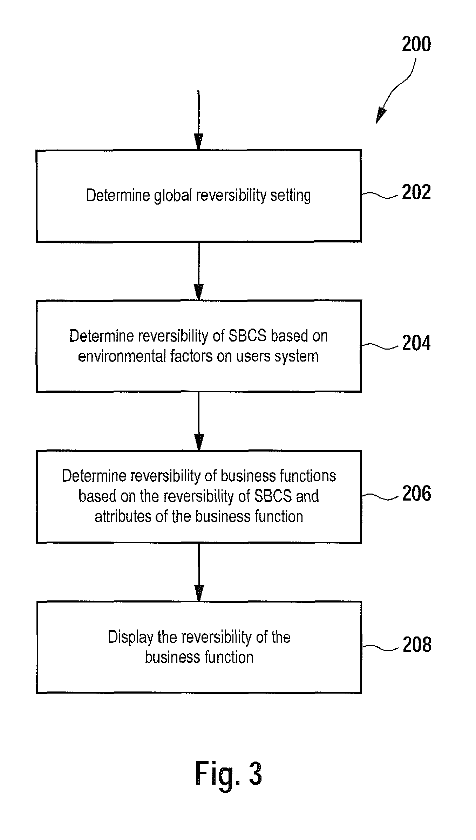

FIG. 3 illustrates a flow diagram for dynamically determining reversibility of a business function based on environmental factors of the user's system according to an exemplary embodiment of the present invention. A processor on the user's system may be configured to receive request 302 for determining reversibility of a business function. The request 302 may be triggered by a deployment of a new enhancement package. Alternatively, the request 302 may be triggered by another request to activate the business function. At 304, the processor may be configured to check a global setting of the user's system to determine whether the user's system globally allow for a reversal of business functions. If the global setting does not allow for such a reversal, a user interface may display information to show that the business function as not reversible.

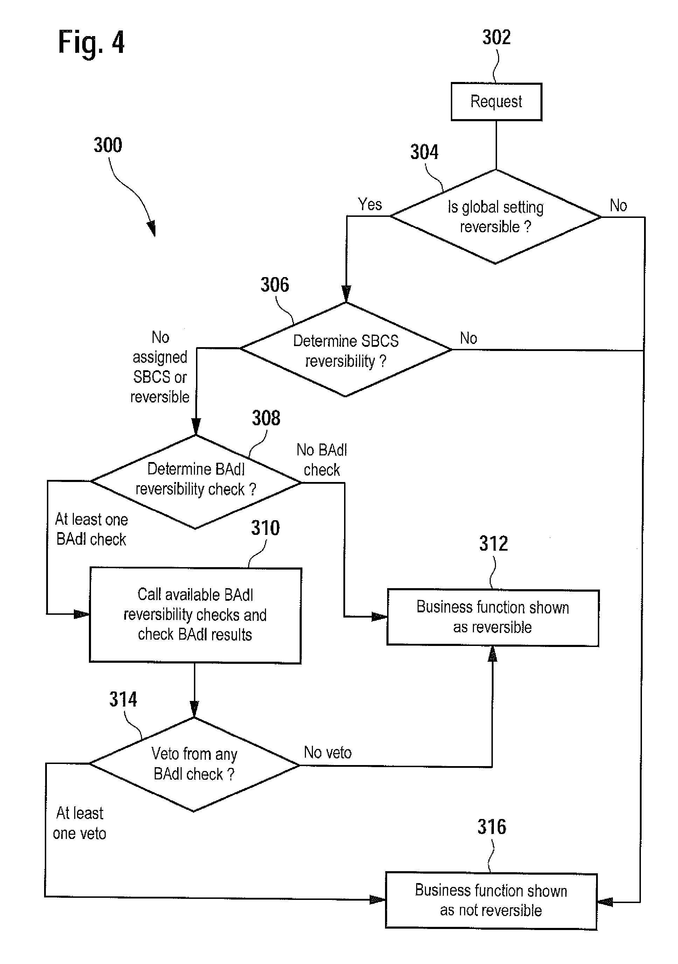

If the global setting allows for such a reversal, at 306, the processor may be configured to search for SBCS that are associated with the business function via a development package and determine whether these associated SBCS are reversible. For clarity, an embodiment of the process to determine whether these associated SBCS are reversible is illustrated in FIG. 4.

FIG. 4 illustrates a flow diagram for determining reversibility of switch BC sets (SBCS) according to an exemplary embodiment of the present invention. At 402, a processor may be configured to determine whether any SBCS are associated to the business function. If it is determined that there is no SBCS associated to the business function, the business function is not constrained by SBCS, and the processor may proceed to step 308 to determine the reversibility of the business function. However, if it is determined that there are SBCS associated to the business function, at 404, the processor is configured to determine whether the business function has been activated (or switched on). If it is determined that the business function has been activated, at 408, the processor may be configured to determine whether the associated SBCS are linked to an image file. If the associated SBCS are not linked to any image files, the business function may be an activated business function associated with an earlier version of SBCS. Thus, the business function is displayed as not reversible at 410. However, if the associated SBCS are linked to an image file, the business function may be an activated business function whose reversibility may be further determined at 308. Referring back to 404, if it is determined that the business function has not been activated (or switched on), at 406, the processor may be configured to determine whether SBCS reversibility patches are available in the user's system. These reversibility patches may include codes that may be used to create image files for SBCS. In one embodiment these patches may be generally applicable to all SBCS. Thus, if it is determined that SBCS reversibility patches are not available on the user's system, the business function may be displayed as not reversible at 410. However, if it is determined that SBCS reversibility patches are available on the user's system, the processor may proceed to determine the reversibility of the business function at 308.

Referring back to step 306 of FIG. 3, if it is determined that the associated SBCS is reversible or the business function does not have an associated SBCS, at 308, the processor may be configured to perform checks specific to the business function to determine whether the business function is reversible. The business function specific checks may be applicable for certain business functions, but not all business functions. If a business function does not include further specific checks, the business function may be shown as reversible at 312. However, if the business function includes further specific checks, the processor may be configured to perform these specific checks at 310. These checks may be formulated in the form of conditions. In one exemplary embodiment the condition may be in the form of "business functions which are reversible as long as a certain data conversion took place." In another exemplary embodiment the condition may be in the form of "business functions which are reversible as long as they are not yet transported into the productive system." In another exemplary embodiment, the condition may be in the form of "business functions which are reversible only when certain customized settings are reset to the initial value." These conditions may be implemented by using extensions such as Business Add Ins (BAdls) to the business functions. These BAdls may be implemented by the developers or alternatively, by third parties. At 314, if it is determined that there is no veto from any of the business function specific checks, the business function may be displayed as reversible at 312. However, if it is determined that there is at least one veto from the checks, the business function may be displayed as irreversible at 316.

### List of Reference Numerals

- 102: user interface
- 104-106: business function set
- 108: switch
- 110: package
- 112: development object
- 114-116: switch BC set
- 118: tables
- 120: link
- 202-208: steps
- 302-316: steps
- 402-410: steps
- 500: computer system
- 501: user device
- 502: memory device
- 503: package
- 505: table
- 507: application program
- 509: processor
- 511: display device
- 513: checker
- 515: network
- 517: repository
- 519: patch library
- 521: image file folder
- 523: state info
- 525: software switches
- 527: database
- 529: entries
- 531: identifier
- 533: table
- 535: database table
- 537: column number
- 539: row number
- 541: software switch
- 543: original value
- 545: cell

## Claims

1. A computer-implemented method for updating program functions being installed on a computer system (500), each of the updated program functions being implemented by a set of software elements (507) in association with a table (505) storing customizing values for default values for parameters of the updated program function, each of the updated program functions being associated with state information (523), wherein the state information (523) indicate active and inactive states of the updated program function, wherein a logical value of one or more of a plurality of stored software switches (525) depends on the state information (523), each of the software switches (525) enabling or disabling execution of the software elements (507) according to its logical value, the method comprising for each of the updated program functions:
- presenting a plurality of program functions of at least one set of functions for selection by a user;
- receiving a selection of the updated program function, wherein the active state of the updated program function is triggered by a reception of an activation of the updated program function, the active state comprising actively processing the updated program function by executing the software elements (507) according to the logical value of the software switch (525, 541), wherein the processing comprises writing each of the customizing values into respective cells (545) of at least one database table (535) of the computer system (500), thereby updating the default values, each cell (545) being identified by a cell identifier comprising a column and row fields (537, 539) of the at least one database table (535), creating, by a software patch, an image file comprising the default values and their respective cell identifiers and storing, by the software patch, the image file in a storage component (521) of the computer system (500);
- if the updated program function is in the inactive state generating a first search request containing an identifier of the software patch; searching a plurality of identifiers of stored items for the identifier of the software patch; and if the identifier of the software patch is found, displaying the table (505) as reversible, otherwise displaying the table (505) as irreversible;
- if the updated program function is in the active state generating a second search request containing respective cell identifiers of the customizing values for parameters of the updated program function; searching a plurality of stored image files for the cell identifiers by matching each of the cell identifiers with each of the cell identifiers of the image files; and if there is a match, displaying the table (505) as reversible, otherwise displaying the table (505) as irreversible;
- if the table (505) is irreversible, displaying the updated program function as irreversible;
- if the table (505) is reversible determining at least one selection criterion of the updated program function; if the at least one selection criterion is not satisfied, displaying the updated program function as irreversible; otherwise, displaying the updated program function as reversible;
- wherein the updated program function is reversible comprises enabling activating and deactivating of the updated program function.

2. The method of claim 1, wherein the software patch is a software code being inserted into an executable program.

3. The method of claim 2, wherein the identifier of the software patch comprises a file identifier of the executable program file.

4. The method of claim 3, wherein the file identifier is a file Cyclic Redundancy Check number, Hash number, SHA-1 or MD5 of the executable program file.

5. The method of claim 4, wherein the searching comprises comparing the file identifier with each identifier of the plurality of identifiers of stored items.

6. The method of claim 1, wherein displaying the table (505) comprises:
- executing a user interface program to display graphic elements on a hardware display counsel, the graphic element comprises a display of "table" associated with a checkbox element, wherein the checkbox displays reversibility status of the table;
- flagging the checkbox, wherein the flagging is indicative of the table being reversible or not.

7. The method of claim 1, wherein displaying the updated program function:
- executing a user interface program to display graphic elements on a hardware display counsel, the graphic element comprises a display of "updated program function" associated with a checkbox, wherein the checkbox displays reversibility status of the updated program function;
- flagging the checkbox, wherein the flagging is indicative of the updated program function being reversible or not.

8. The method of claim 1, wherein the at least one selection criterion comprises the software elements (507) are transported into a productive system of the computer system (500).

9. The method of anyone of the previous claims, wherein the software elements (507) and the table (505) relate to a software package (503).

10. A computer-readable non-transitory storage medium comprising computer-readable instructions which, when executed by a processor, cause the processor to perform the method steps of anyone of the previous claims.

11. A computer system for updating program functions being installed on a computer system (500), each of the updated program functions being implemented by a set of software elements (507) in association with a table (505) storing customizing values for default values for parameters of the updated program function, each of the updated program functions being associated with state information (523), wherein the state information (523) indicate active and inactive states of the updated program function, wherein a logical value of one or more of a plurality of stored software switches (525) depends on the state information (523), each of the software switches (525) enabling or disabling execution of the software elements (507) according to its logical value, for each of the updated program functions the computer system being adapted for:
- presenting a plurality of program functions of at least one set of functions for selection by a user;
- receiving a selection of the updated program function, wherein the active state of the updated program function is triggered by a reception of an activation of the updated program function, the active state comprising actively processing the updated program function by executing the software elements (507) according to the logical value of the software switch (525, 541), wherein the processing comprises writing each of the customizing values into respective cells (545) of at least one database table (535) of the computer system (500), thereby updating the default values, each cell (545) being identified by a cell identifier comprising a column and row fields (537, 539) of the at least one database table (535), creating, by a software patch, an image file comprising the default values and their respective cell identifiers and storing, by the software patch, the image file in a storage component (521) of the computer system (500);
- if the updated program function is in the inactive state generating a first search request containing an identifier of the software patch; searching a plurality of identifiers of stored items for the identifier of the software patch; and if the identifier of the software patch is found, displaying the table (505) as reversible, otherwise displaying the table (505) as irreversible;
- if the updated program function is in the active state generating a second search request containing respective cell identifiers of the customizing parameters of the updated program function; searching a plurality of stored image files for the cell identifiers by matching each of the cell identifiers with each of the cell identifiers of the image files; and if there is a match, displaying the table (505) as reversible, otherwise displaying the table (505) as irreversible;
- if the table (505) is irreversible, displaying the updated program function as irreversible;
- if the table (505) is reversible determining at least one selection criterion of the updated program function; if the at least one selection criterion is not satisfied, displaying the updated program function as irreversible; otherwise, displaying the updated program function as reversible;
- wherein the updated program function is reversible comprises enabling activating and deactivating of the updated program function.
